# DEMANDE DE BREVET EUROPEEN

(11) **EP 1 078 963 A2**
(43) Date de publication de la demande: **28.02.2001**
(21) Numéro de dépôt: 00402365.1
(22) Date de dépôt: 25.08.2000
(51) Int. Cl.: C09D 103/00, C09D 5/08

(54) **Composition de traitement à base d'amidon prégélatinisé et procédé d'application sur une surface métallique, notamment d'acier**

(30) Priorité: 26.08.1999 FR 9910832
(71) Demandeur: USINOR, 92800 Puteaux (FR)
(72) Inventeur: Kefferstein, Ronald, 13730 Saint Victoret (FR); Scherer, Lothaire, 13270 Fos Sur Mer (FR)
(74) Mandataire: Neyret, Daniel

(57) **Abrégé**

Composition aqueuse comprenant au moins 2% en poids d'amidon prégélatinisé, et, en émulsion, au moins 1% de cire ou d'huile végétale, de préférence choisie parmi la cire de carnauba, l'huile de jojoba et la cire de candelilla.

Procédé consistant à appliquer une couche de cette composition et à la sécher de manière à obtenir un film sec de densité surfacique comprise entre 1 et 2,5 g/m².

Application à la protection temporaire contre la corrosion et à la prélubrification.

## Description

L'invention concerne le domaine des compositions pour le traitement de surfaces métalliques destiné à apporter à la fois un effet prélubrifiant et un effet de protection temporaire contre la corrosion.

L'effet prélubrifiant se caractérise par l'amélioration des propriétés tribologiques de la surface ainsi traitée puis huilée d'une manière conventionnelle ; cet effet est intéressant pour faciliter les opérations de mise en forme, par exemple d'emboutissage.

L'effet de protection contre la corrosion est temporaire au sens qu'un simple dégraissage de la surface traitée permet d'éliminer la couche de traitement ; cette dégraissabilité est importante par exemple pour préparer la mise en peinture de la surface.

Ces traitements de surface métallique sont en général effectués en deux étapes :
- application d'une couche homogène liquide de la composition de traitement sur la surface,
- séchage de la couche appliquée, adapté pour éliminer la quasi-totalité de l'eau liquide de cette couche, à une température suffisamment basse pour éviter toute détérioration des composants de traitement.

Le film dit « sec » que l'on obtient alors peut encore renfermer des quantités importantes d'eau inclues dans la composition du film (comme de l'eau d'hydratation par exemple).

On recherche des compositions applicables de manière homogène en films minces et efficaces à faible densité surfacique ; la densité surfacique souhaitée, mesurée à l'état sec, est alors généralement inférieure à 2,5 g/m².

D'une manière classique, ces compositions de traitement de surface comprennent, comme composants essentiels en solution ou en émulsion, au moins un agent liant suffisamment filmogène, au moins un agent lubrifiant et au moins un agent tensio-actif pour favoriser l'étalement du film sur la surface à traiter.

Dans le cas d'émulsion, les agents émulsifiants qu'on utilise ont généralement un effet tensio-actif favorisant l'étalement du film.

Ces compositions de traitement comprennent généralement en outre des inhibiteurs de corrosion, qui peuvent également avoir un effet tensio-actif.

L'invention concerne plus particulièrement le domaine des compositions de traitement de surface métallique comprenant un liant à base d'amidon prégélatinisé, destinées à former un film sec homogène sur cette surface.

La prégélatinisation de l'amidon est une opération spécificique, réalisée par le producteur, qui détruit la structure cristalline du granule d'amidon et réduit les liaisons hydrogène responsables de cette structure. Cette opération est réalisée, à environ 100 °C, par cylindrage ou extension. On obtient alors de l'amidon prégélatinisé qui se présente sous forme de poudre. C'est cette opération, connue en elle-même, qui permet à l'amidon (partiellement gélatinisé) d'être soluble dans l'eau froide et d'obtenir des solutions de faibles viscosités. Cette opération de prégélatinisation permettra de contrôler (en particulier au niveau de la viscosité) les phénomènes de gélatinisation ou gélification en présence d'eau.

L'amidon est essentiellement un homopolymère de D-glucose (monomère glucosyl fortement hydroxylé), composé principalement d'un mélange de deux types de polymère :
- l'amylose, molécule essentiellement linéaire, susceptible de complexer des molécules hydrophobes comme les acides gras, réactive avec les agents émulsifiants et connue pour ses propriétés filmogènes - T(fusion) ≈ 120°C.
- l'amylopectine, molécule essentiellement ramifiée de masse moléculaire très élevée (10⁷ à 10⁸ )- T(fusion) ≈ 45°C.

La teneur en amylose de l'amidon dépend de son origine végétale comme indiqué au tableau I ; certaines variétés génétiquement modifiées peuvent donner des amidons plus riches en amylose.

**Tableau I -**

| Teneurs moyennes en amylose de différents amidons. | |
|---|---|
| Origine végétale de l'amidon | teneur amylose (%) |
| Maïs normal | 28% |
| Maïs cireux | <1% |
| Maïs « riche en amylose » | 65-70% |
| Blé | 25-28% |
| Pomme de terre | 19-22% |
| Pomme de terre cireux | <1% |
| Pois lisse | 33-35% |

L'effet liant de l'amidon prégélatinisé résulte des mécanismes chimiques décrits ci-après.

L'absorption d'eau par les grains d'amidon se manifeste par un gonflement réversible de la partie amorphe et la formation, dans un premier temps, de liaisons hydrogène interchaînes ; dans un second temps, l'eau agit comme un plastifiant qui permet l'alignement des cristallites par extension des phases amorphes inter-cristallines et une grande partie de l'eau absorbée est alors liée à la structure : au moins 30% d'eau sont nécessaire pour que la plastification apparaisse ; la plastification fait baisser la température de transition vitreuse (de la partie amorphe).

Un gel d'amidon prégélatinisé peut donc être décrit comme une phase discontinue composée de granules gonflés d'amidon enrichis en amylopeptine dispersée dans une phase continue d'amylose solubilisée.

Parmi les différents produits issus de la prégélatinisation des amidons, on trouve, entre autres :
- les amidons fluides,
- les amidons réticulés,
- les dextrines, qui sont des oligosaccharides linéaires ou ramifiées comportant en général de 5 à 10 unités glucosyl,
- les esters d'amidon, comme les acétates ou les phosphates d'amidon.
- les éthers d'amidon, comme les O-alkyl amidon.

Pour parvenir à ces différents produits de la gélatinisation des amidons, on utilise différents moyens de modification, comme les modifications « enzymatiques », les modifications de « dépolymérisation », les modifications chimiques de « réticulation », de « substitution », de « dextrinisation » ou « saccharification ».

Le document FR 2 508 051 (ROQUETTES) décrit (voir notamment revendication 13) une composition de traitement de surface, notamment pour protection temporaire contre la corrosion, comprenant, par rapport à la matière sèche :
- de 30 à 95% d'un amidon waxy extrudé,
- de 1 à 25% d'un agent plastifiant,
- de 0,5 à 5% d'un agent mouillant ou tensio-actif.

Selon ce document (page 5, lignes 17-32), l'agent plastifiant ajouté à la composition à base d'amidon permet d'éviter les craquelures et l'écaillage du film résultant du traitement ; cet agent est choisi dans le groupe comprenant non seulement le sorbitol, un polyéthylèneglycol, ou la glycérine, mais aussi les sirops de glucose, les lactates, les gluconates, les cires émulsionnables, l'urée, les thiourée et les nitrates.

Selon ce document (page 6, lignes 2 et suivantes), pour une protection temporaire efficace dans des ambiances humides, la composition de traitement doit également contenir une résine ou un agent insolubilisant ou réticulant, généralement 2 à 30%, comme de la résorcine-formol ou de la cyanamide-formol ; de ce fait, le film résultant du traitement est au moins partiellement réticulé, ce qui nuit à sa dégraissabilité.

Selon ce document (page 7, lignes 27-28), la composition de traitement de surface peut également contenir des agents anti-rouille, c'est à dire inhibiteur de corrosion.

Ce document décrit l'application de cette composition sur des surfaces d'acier (exemple 1), mais, pour obtenir une protection efficace contre la corrosion, la densité surfacique à appliquer doit être très élevée : 100 g/m² à la page 16, 200 g/m² à la page 19.

L'invention a pour but de fournir une composition de traitement de surface efficace à des densités surfaciques beaucoup plus faibles, à la fois pour la protection temporaire contre la corrosion et pour la prélubrification ; l'invention a pour but de fournir une composition de traitement de surface facilement dégraissable.

A cet effet, l'invention a pour objet une composition aqueuse de traitement de surface métallique, facilement dégraissable, caractérisée en ce qu'elle comprend en émulsion au moins 2% en poids d'amidon prégélatinisé et au moins 1% de cire ou d'huile végétale, ou au moins 1% de cire ou d'huile synthétique de nature chimique équivalente.

En utilisant spécifiquement une huile ou une cire d'origine végétale émulsionnée dans la composition de traitement à base d'amidon prégélatinisé, on parvient ainsi, selon l'invention, à obtenir à la fois une protection efficace contre la corrosion en atmosphère humide et un effet prélubrifiant, même s'il l'on applique cette composition en film mince et sans agent de réticulation, de manière à être facilement dégraissable.

L'invention peut également présenter une ou plusieurs des caractéristiques suivantes :
- ledit amidon est réticulé
- ledit amidon est un amidon de pomme de terre ou de maïs.
- la teneur en amylose dudit amidon est inférieure ou égale à 25%.
- le pH de la composition est compris entre 6,5 et 8.
- la teneur pondérale en amidon prégélatinisé est inférieure ou égale à 7% et la teneur pondérale en huile ou en cire dans ladite composition est inférieure ou égale à 5%.
- ladite cire ou huile végétale est choisie dans le groupe comprenant la cire de carnauba, l'huile de jojoba, la cire de candelilla et leurs mélanges.
- la composition comprend également au moins un inhibiteur de corrosion, choisi de préférence dans le groupe comprenant le carboxylate d'alkylamine, le hydroéthyl-alkylène-imidazoline et leurs mélanges.
- ledit inhibiteur de corrosion est un mélange de carboxylate d'alkylamine et d'hydroéthyl-alkylène-imidazoline, de préférence dans une proportion approximative de 2:1.

L'invention a également pour objet un procédé de traitement d'une surface métallique à l'aide d'une composition selon l'invention comprenant les étapes consistant à appliquer une couche de ladite composition sur ladite surface puis à sécher ladite couche de manière à obtenir un film sec, caractérisé en ce que la densité surfacique dudit film sec est comprise entre 1 et 2,5 g/m².

De préférence, ladite surface métallique est une surface d'acier.
L'invention a enfin pour objet l'utilisation de ce procédé pour la protection temporaire contre la corrosion et/ou pour la prélubrification de ladite surface.

L'invention sera mieux comprise à la lecture de la description qui va suivre, donnée à titre d'exemple non limitatif.

On prépare les compositions de traitement de surface selon l'invention de la manière suivante :
- dissolution d'amidon prégélatinisé dans de l'eau,
- indépendamment, à l'aide d'émulgateurs adaptés, comme des alcools gras éthoxylés, émulsification de la cire ou de l'huile d'origine végétale dans de l'eau,
- mélange de la solution d'amidon prégélatinisé et de l'émulsion aqueuse obtenues,
- le cas échéant, addition au mélange d'autres composants, comme des inhibiteurs de corrosion.

Comme cire ou huile d'origine végétale, on utilise de préférence la cire de carnauba, l'huile de jojoba ou la cire candelilla.

La cire de carnauba provient d'un palmier « Corypha Cerifera » ; elle est composée essentiellement de triglycéride d'acide cérotique ; le point de fusion de ce triglycéride est très élevé : 80 à 85°C ; l'acide cérotique est un acide gras saturé en C26.

L'huile de jojoba est une cire liquide contenue en forte proportion (45 à 60%) dans les graines d'un arbuste « Simmondsia Chinensis », qui pousse naturellement en zones semi-désertiques (nord du Mexique, Arizona, Texas) ; elle est constituée d'esters aliphatiques à base d'acides gras et d'alcools gras mono-insaturés, comprenant principalement l'eicosénoate d'eicosénol et de docosénol (C19H37COO-C20H39, C19H37COO-C22H43) ; son point de fusion est compris entre 6 et 7°C ; cette huile rancit très difficilement.

La cire de Candelilla provient des arbustes « Euphorbia Cerifera » et « Pedilantus Pavonis », qui croissent naturellement au nord du Mexique et au sud du Texas ; elle est constituée, pour une moitié environ, d'hydrocarbures, principalement de l'hentricontane C31H64, et, pour l'autre moitié, d'un mélange d'acides gras, d'alcools aliphatiques et triterpéniques et de leurs esters ; son point de fusion est compris entre 60 et 70°C.

On prépare les compositions de traitement de surface de manière à obtenir les proportions pondérales des principaux composants suivantes :
- 2 à 7% d'amidon prégélatinisé,
- 1 à 5% de phase huileuse ou cireuse.

De préférence, on rajoute également dans ces compositions des inhibiteurs de corrosion ; de préférence, on utilise un carboxylate d'alkylamine et/ou un hydroéthyl-alkylène-imidazoline ; les hydroéthyl-alkylène-imidazolines sont décrits dans le document EP 651 074 (PETROLITE).

Dans ce cas, les proportions pondérales de ces inhibiteurs dans la composition de traitement sont de préférence les suivantes :
- 0,5 à 3% de carboxylate d'alkylamine,
- 0,25% à 2% d'hydroéthyl-alkylène-imidazoline.

A l'intérieur des plages de composition définies ci-dessus, les proportions d'agent liant, lubrifiant et, le cas échéant, inhibiteur, sont adaptées d'une manière connue en elle-même pour obtenir, après traitement, à la fois les meilleures propriétés tribologiques et la meilleure protection contre la corrosion.

Pour traiter la surface métallique, la composition préparée est ensuite appliquée sur cette surface de manière à former une couche homogène liquide puis séchée pour éliminer la quasi-totalité de l'eau liquide de cette couche, à une température suffisamment basse pour éviter toute détérioration des composants de traitement, notamment de l'amidon prégélatinisé.

A l'état dit « sec », le film de protection temporaire ainsi obtenu renferme des quantités importantes d'eau inclues dans la composition du film, notamment dans l'amidon prégélatinisé.

De préférence, on adapte les conditions d'application de manière à obtenir un film sec de densité surfacique comprise entre 1 et 2,5 g/m² environ.

En deçà de 1 g/m2, il est difficile d'obtenir un film d'épaisseur suffisamment uniforme et la protection contre la corrosion n'est pas toujours assurée d'une manière suffisante.

Au delà de 2,5 g/m2, le film risque d'être plus difficile à dégraisser ; on risque également des désagréments de collage, en cas d'empilement de surfaces traitées.

En utilisant ainsi la composition selon l'invention pour traiter des surface d'acier nu, on obtient à la fois une très bonne protection temporaire contre la corrosion et une amélioration sensible de propriétés tribologiques ; le film sec de traitement est facile à dégraisser.

De plus, les propriétés lubrifiantes du film sec de traitement obtenu à l'aide de la composition selon l'invention sont maintenues même après une pulvérisation abondante d'une émulsion aqueuse d'huile du type de celle qu'on utilise en emboutissage pour la lubrification.

Enfin, comme les produits essentiels de cette composition de traitement et du film sec obtenu après traitement sont naturels et biodégradables, il en résulte un avantage significatif pour l'environnement.

D'autres avantages du procédé de l'invention apparaîtront à la lecture des exemples présentés ci-après à titre non limitatif de la présente invention.

### MATÉRIELS :

Pour les exemples illustrant l'invention, la composition de traitement contient, sauf indications contraires dans les exemples ci-après :
1- comme amidon : amidon prégélatinisé de pomme de terre, référencé LAB 2431 ou Pregeflo PJ20, commercialisés par la Société ROQUETTE ; ces amidons diffèrent par leur granulométrie ; ils sont tous les deux modifiés par réticulation ; ils sont tous les deux solubles dans l'eau à température ambiante dans les proportions utilisées pour la mise en oeuvre de l'invention.
2- comme cire ou huile végétale, la cire de carnauba : cire autoémulsifiable référencée Cerax M33 ou Cerax AO28, commercialisées par la Société BARLOCHER France ; le point de fusion de la cire AO28 est compris entre 80 et 85°C, alors que celui de la cire M33 est compris entre 62 et 67°C ; le bas point de fusion de la cire M33 s'explique par la présence, dans ce produit commercial, de 10% environ d'émulgateurs à base d'alcools gras éthoxylés et de 2 à 5% environ de paraffine ; ces additifs améliorent le conditionnement de la cire en granulés solides et facilitent sa mise en émulsion.

Pour les tests décrits ci-après, sauf indications contraires, les compositions de traitement sont appliquées sur des tôles d'acier nu de manière à former un film sec de 1 à 2 g/m2.

### MÉTHODES :

### 1 - Test de corrosion « humidotherme » (ou « FKW »):

Les éprouvettes à tester sont placées telles quelles en enceinte climatique, ce qui correspond à la norme DIN 50017 et simule les conditions de corrosion d'une spire extérieure de bobine de tôle ou d'une tôle découpée en feuille pendant un stockage.

Le cycle climatique auquel est soumis l'éprouvette à tester est le suivant : 8 h à 40°C et 95% à 100% d'humidité - 16 h à 20°C et 75% d'humidité relative.

Le résultat du test s'obtient en relevant le nombre de cycles successifs avant qu'apparaissent des traces de corrosion sur l'éprouvette.

### 2 - Test de frottement ou de lubrification :

Pour ces tests, on utilise un tribomètre plan-plan d'un type classique.

Avant la mesure, les éprouvettes à tester, déjà traitées en surface le cas échéant, sont huilées à l'aide d'huile entière référencée 8021 de la Société QUAKER ; le grammage d'huile déposé est de l'ordre de 2 g/m².

Les éprouvettes huilées sont ensuite serrées selon une force de serrage Fₛ entre deux plaquettes en acier rapide d'une surface de 1 cm².

On mesure le coefficient de frottement k tout en déplaçant l'éprouvette à vitesse constante V par rapport aux plaquettes sur une course D totale de 180 mm, tout en augmentant progressivement la force de serrage Fₛ , de 200 daN en début d'essai à 2000 daN en fin d'essai.

La vitesse de traction V est de 10 mm/s, sauf précision contraire.

La courbe d'évolution du coefficient de frottement k en fonction du temps ou de la force de serrage Fₛ est généralement décroissante, plus rarement constante ; pour évaluer les performances tribologiques, on mesure généralement le coefficient de frottement en fin de course, pour Fₛ ≈ 1800 daN.

### 3 - Test de compatibilité avec les huiles solubles :

II s'agit de vérifier que les propriétés lubrifiantes du film sec de traitement obtenu à l'aide de la composition selon l'invention sont maintenues même après une pulvérisation abondante d'une émulsion aqueuse d'huile du type de celle qu'on utilise pour la lubrification en emboutissage.

Ces émulsions ou solutions aqueuses servent à lubrifier mais aussi à refroidir les outils d'emboutissage, notamment lorsque les cadences sont élevées ; il convient donc de vérifier que, en arrosant abondamment une surface traitée selon l'invention par une émulsion ou une solution aqueuse d'emboutissage, on ne détériore pas les propriétés tribologiques du film sec résultant du traitement, par exemple par lixiviation ou par formation de savons, au point de provoquer même du grippage.

On utilise pour ce test l'huile soluble référencée 72CC de la Société QUAKER diluée à 10% dans de l'eau, puis on effectue directement, sans rehuilage, la mesure de frottement correspondant au test 2 ci-dessus.

La mesure de frottement donne alors une indication sur le maintien ou non des propriétés lubrifiantes apportées par le film sec.

### 4 - Test de dégraissablité :

Sur un échantillon traité, doté d'un film sec, on pulvérise de l'eau à 50-60°C sous 1 à 3 10⁵ Pa. , pendant 1 à 3 minutes.

Après cette opération de dégraissage, on observe la surface traitée ; la disparition du film sec signifie une bonne dégraissabilité.

### Exemple 1 :

### Comparaison des performances obtenues à l'aide des compositions selon l'invention avec celles obtenues à l'aide des compositions également à base d'amidon de l'art antérieur.

Un film sec d'amidon prégélatinisé seul appliqué sur une surface d'acier n'apporte aucune protection efficace contre la corrosion et peut même au contraire accélérer la corrosion ; l'incorporation d'un agent plastifiant à ce film est donc nécessaire pour obtenir une protection significative contre la corrosion.

A cet effet, plusieurs types d'huiles et de cires végétales ont été ajoutées en émulsion à des solutions d'amidon prégélatinisé :
1- selon l'invention : huile de tournesol, huile de soja, cire de carnauba, huile de candelilla, cire de jojoba.
2- hors du champ de l'invention : cire de polyéthylène, cire de polypropylène.

Les compositions de traitement obtenues ont été testées selon les protocoles 1 et 2 du paragraphe MÉTHODES ci-dessus ; les résultats obtenus en corrosion selon le test 1 (nombre de cycles FKW) et en frottement selon le test 2 (coefficient de frottement) ont montré que :
- seules les compositions contenant une cire ou une huile d'origine végétale (cas 1) permettent d'obtenir une amélioration à la fois des propriétés tribologiques et de la résistance à la corrosion en milieu humide ;
- la cire de carnauba, l'huile de candelilla et/ou la cire de jojoba apportent les meilleurs résultats.

Les films secs obtenus à partir des compositions contenant une huile ou une cire en émulsion se dégraissent facilement selon le protocole 4 du paragraphe MÉTHODES ci-dessus.

Comme l'indique le tableau II en ce qui concerne la cire de carnauba ou le triglycéride d'acide cérotique, ces résultats mettent en évidence une synergie importante entre les deux composants essentiels de la composition de traitement (amidon prégélatinisé et cire/huile végétale), tant sur le plan de la résistance à la corrosion que sur celui des propriétés tribologiques.

**Tableau II -**

| Synergies amidon prégélatinisé - cire/huile végétale. | | |
|---|---|---|
| Composition du film sec | Cycles FKW | Frottement |
| Liant seul : amidon prégélatinisé | <1 | 0,28 |
| Lubrifiant seul : cire de carnauba Cerax M33 | 1 | - |
| Liant + Lubrifiant Cerax M33 : | 2 à 3 | 0,10 |

A titre de comparaison, le coefficient de frottement mesuré sur une éprouvette d'acier non traitée uniquement huilée est de 0,14 environ.

On voit donc que le traitement selon l'invention apporte à la fois un effet prélubrifiant et une protection efficace contre la corrosion en atmosphère humide, alors que la composition de traitement qu'on utilise ne contient pas d'agent réticulant et qu'elle est appliquée à une densité surfacique largement inférieure à 100 g/m².

### Exemple 2 :

### Comparaison des performances obtenues à l'aide des compositions selon l'invention présentant différents types d'amidon :

Différents types d'amidons ont été testés :
- amidon de pomme de terre natif non modifié, comme le produit référencé Farina GP du Groupe ARNAUD,
- amidon de pomme de terre modifié et prégélatinisé soluble, comme le produit référencé LAB2431 ou PJ20 de la Société ROQUETTE, contenant entre 15 et 25% d'amylose,
- amidon de maïs cireux, réticulé et prégélatinisé, comme le produit Dexylose H235 de la Société ROQUETTE, contenant moins de 5% d'amylose,
- amidon de blé soluble à haute teneur en amylose, comme le produit Supranyl 110 commercialisé en France par LAMBERT RIVIÈRE, contenant entre 30 et 35% d'amylose.

De préférences, on utilise des compositions de traitement contenant de l'amidon de pomme de terre modifié et prégélatinisé ou de l'amidon de maïs réticulé et prégélatinisé, car elles permettent d'obtenir plus facilement des films secs homogènes de faible densité surfacique, comprise entre 1 et 2,5 g/m². En particulier, l'utilisation d'amidons prégélatinisés permet d'obtenir des solutions plus fluides que celles obtenues avec des amidons natifs non modifiés ; en effet, pour ces derniers, la mise en solution s'effectue à chaud (>80°C) et en présence d'une enzyme et d'un inhibiteur d'enzyme, et lors du refroidissment les phénomènes de gélatinisation et de gélification s'accompagne d'une forte augmentation de la viscosité, ce qui ne permet pas d'obtenir les films de faible épaisseur recherchés.

Pour l'obtention de films secs fins et homogènes, on a constaté que la concentration pondérale nécessaire en amidon dans la composition était :
- de 2 à 3% pour l'amidon de pomme de terre prégélatinisé ci-dessus, contenant entre 15 et 25% d'amylose,
- de 5 à 7% pour l'amidon de maïs prégélatinisé ci-dessus, contenant moins de 5% d'amylose.

Par ailleurs, pour éviter le phénomène dit de "flash-rust" en langue anglaise, on préfère utiliser des compositions dont le pH est, naturellement ou par ajustement, compris entre 6,5 et 8.

Le phénomène dit de "flash-rust" est un phénomène de corrosion rapide (quelques secondes) apparaissant lorsqu'une surface métallique réactive est mise en contact avec une solution aqueuse, généralement acide ; ce phénomène est bien connu des formulateurs de peintures aqueuses et de solutions acryliques, d'où la nécessité d'utiliser des inhibiteurs ou de maintenir le pH dans un domaine prédéterminé.

Pour l'obtention de films secs, fins et homogènes, il est important que la composition soit suffisamment fluide et stable dans la fourchette de pH requis : de préférence, on utilise des amidons permettant d'obtenir plus facilement des compositions fluides et stables à pH compris entre 6,5 et 8, comme l'amidon de pomme de terre.

### Exemple 3 :

### Comparaison des performances obtenues à l'aide des compositions selon l'invention selon qu'elles comprennent ou non des inhibiteurs de corrosion :

A partir d'une composition de référence comprenant :
- 2,5% en poids d'amidon de pomme de terre prégélatinisé : LAB2431,
- 3% en poids de produit CERAX à base de cire de carnauba,
on prépare des compositions additionnées de différents inhibiteurs de corrosion, notamment :
- à base de sel d'acide benzothiazolylthiosuccinique : produit Irgacor 252 de CIBA),
- à base de borate d'amine : produit RC305 de CRODA,
- à base de N-oléolyl sarcosine ou N-lauroyl sarcisin de la Société JAN DEKKER,
- à base d'acide heptanoïque,
- à base de carboxylate d'alkylamine : LAKELAND AMA de la Société LAKELAND-ARNAUD.
- à base d'hydroéthyl-alkylène-imidazoline : LAKELAND 180H de la Société LAKELAND-ARNAUD.

On traite comme précédemment des échantillons d'acier à l'aide des ces différentes compositions de traitement additivées d'au moins un inhibiteur et on procède à l'évaluation de la résistance à la corrosion apportée par le film sec obtenu sur ces échantillons :
- selon le test 1 ci-dessus,
- selon un test voisin dit test «transport » où les éprouvettes à tester sont placées en paquets serrés de 4 dans une enceinte climatique soumise à des répétitions du cycle climatique suivant : 10 h à 40°C et 95% d'humidité - 4 h à 20°C et 85% d'humidité - 10 h à -5°C et 0% d'humidité - 8h à 30°C et 85% d'humidité relative.
- par les mesures électrochimiques d'impédance, couramment utilisées pour évaluer la résistance à la corrosion.

Selon ces tests et mesures, les meilleurs résultats sont obtenus pour les compositions de traitement qui contiennent :
- 0,5 à 3% en poids de carboxylate d'alkylamine, de préférence 2% ;
- 0,25 à 2% en poids d'hydroéthyl-alkylène-imidazoline, de préférence 1%.

Les résultats des tests de corrosion (test 1) et de frottement (test 2) obtenus à partir de ces compositions sont présentées au tableau III ; ils mettent en évidence une synergie importante entre l'amidon prégélatinisé utilisé comme liant, la cire de carnauba utilisée comme agent plastifiant et lubrifiant et les deux inhibiteurs privilégiés : carboxylate d'alkylamine et hydroéthyl-alkylène-imidazoline.

**Tableau III -**

| Synergies (amidon prégélatinisé - cire végétale) + inhibiteurs. | | |
|---|---|---|
| Composition du film sec : | Cycles FKW | Frottement |
| Amidon prégélatinisé + Carnauba Cerax M33, sans inhibiteurs : | 2-3 | 0,10 |
| Inhibiteurs seuls : carboxylate d'alkylamine et hydroéthyl-alkylène-imidazoline (rapport 2:1) | 2 | |
| Liant + Lubrifiant + Inhibiteurs : | | |
| - Cerax M33 : | >13 | 0,075 |
| - Cerax AO28 : | 8 | - |

Les proportions des différents composants doivent être adaptés dans la composition pour obtenir cet effet de synergie ; en l'occurrence, avec les composants spécifiés ci-dessus, les proportions optimales sont :
- 2 à 4% pour l'amidon prégélatinisé, de préférence 2,5%,
- 1 à 5% pour la cire de carnauba, de préférence 3%,
- 0,75 à 5% de mélange de carboxylate d'alkylamine et d'hydroéthyl-alkylène-imidazoline, de préférence dans une proportion approximative de 2:1.

A titre de comparaison, le coefficient de frottement mesuré sur une éprouvette d'acier non traitée uniquement huilée est de 0,14 environ ; on voit donc que le traitement selon l'invention apporte un effet prélubrifiant encore plus prononcé lorsque la composition de traitement contient du carboxylate d'alkylamine et de l'hydroéthyl-alkylène-imidazoline.

L'effet de synergie est encore plus important en ce qui concerne la résistance à la corrosion lorsqu'on utilise une cire végétale additivée d'émulgateur et de paraffine, comme Cerax M33 (par opposition au Cerax AO28).

A l'inverse, l'utilisation, à la place de la cire de carnauba, d'huile de tournesol, ou d'huile de tournesol oléique, ou d'huile de tournesol éthoxylée n'a pas permis d'obtenir une résistance aussi élevée contre la corrosion.

## Revendications

1. Composition aqueuse de traitement de surface métallique, facilement dégraissable, caractérisée en ce qu'elle comprend en émulsion au moins 2% en poids d'amidon prégélatinisé et au moins 1% de cire ou d'huile végétale, ou au moins 1% de cire ou d'huile synthétique de nature chimique équivalente.

2. Composition selon la revendication 1 caractérisée en ce que ledit amidon prégélatinisé est réticulé.

3. Composition selon l'une quelconque des revendications 1 ou 2, caractérisée en ce que ledit amidon prégélatinisé est un amidon prégélatinisé de pomme de terre ou de maïs.

4. Composition selon l'une quelconque des revendications 1 à 3, caractérisée en ce que son pH est compris entre 6,5 et 8.

5. Composition selon l'une quelconque des revendications 1 à 4, caractérisée en ce que la teneur pondérale en amidon prégélatinisé dans ladite composition est inférieure ou égale à 7% et en ce que la teneur pondérale en huile ou en cire dans ladite composition est inférieure ou égale à 5%.

6. Composition selon l'une quelconque des revendications 1 à 5, caractérisée en ce que la teneur en amylose dudit amidon prégélatinisé est inférieure ou égale à 25%.

7. Composition selon l'une quelconque des revendications précédentes caractérisé en ce que ladite cire ou huile végétale est choisie dans le groupe comprenant la cire de carnauba, l'huile de jojoba, la cire de candelilla et leurs mélanges.

8. Composition selon l'une quelconque des revendications précédentes caractérisée en ce qu'elle comprend également au moins un inhibiteur de corrosion.

9. Composition selon la revendication 8 caractérisée en ce que ledit inhibiteur de corrosion est choisi dans le groupe comprenant le carboxylate d'alkylamine, le hydroéthyl-alkylène-imidazoline et leurs mélanges.

10. Composition selon la revendication 9 caractérisée en ce ledit inhibiteur de corrosion est un mélange de carboxylate d'alkylamine et d'hydroéthyl-alkylène-imidazoline, de préférence dans une proportion approximative de 2:1.

11. Procédé de traitement d'une surface métallique à l'aide d'une composition selon l'une quelconque des revendications précédentes comprenant les étapes consistant à appliquer une couche de ladite composition sur ladite surface puis à sécher ladite couche de manière à obtenir un film sec, caractérisé en ce que la densité surfacique dudit film sec est comprise entre 1 et 2,5 g/m².

12. Procédé selon la revendication 11 caractérisé en ce que ladite surface métallique est une surface d'acier.

13. Utilisation du procédé selon l'une des revendications 11 ou 12 pour la protection temporaire contre la corrosion de ladite surface.

14. Utilisation du procédé selon l'une des revendications 11 ou 12 pour la prélubrification de ladite surface.
